# EUROPEAN PATENT SPECIFICATION

(11) **EP 1 239 118 B1**
(45) Date of publication and mention of the grant of the patent: **26.05.2010**
(21) Application number: 02251538.1
(22) Date of filing: 05.03.2002
(51) Int. Cl.: F01D 11/00, F16J 15/32

(54) **Flexible cloth seal for turbine combustors**
Flexible Textildichtung für Turbinenbrennkammern
Joint d'étanchéité flexible pour chambres de combustion

(30) Priority: 05.03.2001 US 798842
(43) Date of publication of application: 11.09.2002
(73) Proprietor: GENERAL ELECTRIC COMPANY, Schenectady, NY 12345 (US)
(72) Inventor: Aksit, Mahmut Faruk, Troy, New York 12180 (US); Ebnoit, Jeffrey Arthur, Scotia, New York 12302 (US); Aslam, Sami, Latham, New York 12110 (US); Bland, Robert James Lloyd, Quiedo, Florida 32765 (US); Bagepalli, Bharat Sampathkumar, Niskayuna, New York 12309 (US)
(74) Representative: Illingworth-Law, William Illingworth

(56) References cited:
- EP-A- 1 052 438
- WO-A-97/14897
- US-A- 4 645 217
- US-A- 5 474 306
- US-A- 5 568 931
- US-A- 5 688 105

## Description

This invention relates to flexible metallic cloth seals for gas turbine combustors and, more particularly, to seals having a composite structure formed from layers of wear-resistant metallic cloth and high-strength stiff sheet material forming shims which are extended to the sealing surface to choke or minimize leakage flow.

In conventional gas turbines, a plurality of combustors are arranged in an annular array about the axis of the turbine for supplying hot gases of combustion from the combustor through transition pieces and into the first-stage nozzle. Combustion systems of this type require seals that can tolerate relative motion between the components forming the sealing junction, for example, between the transition pieces and the first-stage nozzle. Conventional seals are designed to slide in slots machined into the adjoining parts. For example, the transition pieces have outwardly opening slots (generally perpendicular to the direction of gas flow through the transition pieces), while the first-stage nozzles have generally axially opening slots. Typically, a relatively rigid seal extends between the two generally perpendicularly arranged slots but has sufficient flexibility to accommodate relative motion between the parts. However, these relatively rigid seals tip or "toe" when a misalignment between the sealing parts occurs and this allows excess leakage flow through the seals.

Flexible brush and cloth seals have been developed to reduce leakage through joints such as those between transition pieces and first-stage nozzles. For example, see U.S. Patents Nos. 5,474,306; 5,657,998; 5,915,697 and application Serial No. 09/158,738, filed September 22, 1998, of common assignee herewith. These flexible brush and cloth seals introduce substantial flexibility into the seal, enabling the seal to conform to the slot surface and hence reduce flow leakage rates when the adjoining surfaces are misaligned. One form of the cloth seals includes a metallic cloth folded over an internal stiff shim which provides some rigidity to the seal, yet provides sufficient flexibility upon relative movement of the sealed parts to maintain the cloth seal against its opposed sealing surface. However, due to the porous nature of the metallic cloth, some leakage flow can filter through the cloth layer between the shim and the slot surface about the edge of the seal.

Seals are also required between adjacent transition pieces. Elongated shims with metallic cloth folded over both sides of the shims have been provided for insertion into the registering slots along adjacent walls of the transition pieces. However, these elongated seals, similarly as the seals previously discussed between the transition pieces and the first-stage nozzle, afford some leakage flow through the cloth layer between the shim and the slot sealing surfaces. Accordingly, there is a need for a seal assembly which can substantially reduce this leakage flow. US 5474306 is the closest prior art and exhibits the features of the preamble of claim 1

According to the invention, there is provided a seal assembly for sealing between the first and second turbine parts of a gas turbine having a first turbine part and a second turbine part, said first turbine part including a slot, said seal assembly including a high temperature-resistant flexible material received in the slot of the first turbine part and having a surface engaging a wall of the first turbine part forming part of the slot to form a seal therewith; said seal assembly being characterised by a shim including a non-porous stiff sheet overlying a surface of the material opposite the surface thereof engaging the wall and overlying an edge of the material in the slot adjacent a base of the slot to preclude or minimize flow of fluid from a high pressure region on the shim side of the seal assembly past the seal and into a lower pressure region.

The material may comprise a metallic cloth.

The first turbine part may include a transition piece having said slot, said second turbine part including a first-stage nozzle having a slot, and said seal assembly including a bracket secured at one edge to said material and having an opposite edge received in said first-stage nozzle slot.

The first turbine part may include a transition piece and said second turbine part may include a first-stage nozzle for receiving hot gases of combustion from a combustor, said transition piece including the slot, the seal assembly extending between the transition piece and the first-stage nozzle, the non-porous stiff sheet overlying a surface of the material opposite the surface of said material engaging the wall.

The first-stage nozzle may include a slot, and said seal assembly may include a bracket secured along one edge to said material and having an opposite edge received in said first-stage nozzle slot.

The seal assembly may be a spline seal assembly and said first and second turbine parts may include a pair of adjacent transition pieces for receiving hot gases of combustion from combustors and flowing the hot gases into a first-stage turbine nozzle, said adjacent transition pieces having opposing side walls including registering slots, wherein the high temperature-resistant flexible material may be received in the slots of the adjacent transition pieces and engaging walls forming said slots to form respective seals with said walls, and the non-porous stiff sheet of the shim overlying a side of the material opposite sides thereof engaging said walls and overlying opposite edges of said material in the slots adjacent bases of the slots to preclude or minimize flow of a fluid from a high pressure region on the shim side of the seal assembly past the seal between the material and said slot walls and into a lower pressure region.

The invention also includes a gas turbine having seal assemblies as above wherein said first and second turbine parts may include at least a pair of adjacent transition and a first-stage nozzle for receiving hot gases of combustion from combustors, said transition pieces including outwardly opening first slots and said nozzle including opposed registering second slots, first seal assemblies extending between the transition pieces and the first-stage nozzle with first said high temperature-resistant flexible materials received in the first slots of the transition pieces and having surfaces engaging walls of the first slots to form seals therewith and shims whose non-porous stiff sheets overly surfaces of the first materials opposite the surfaces of said materials engaging the first slot walls and overlying edges of the first materials in the slots adjacent bases thereof to preclude or minimize flow of fluid from a high pressure region on the shim side of the seal assemblies past the seal assemblies and into a lower pressure region, a second seal assembly for sealing between said adjacent transition pieces, said second seal assembly including a second high temperature-resistant flexible material received in the second slots of the adjacent transition pieces and engaging walls forming said second slots to form respective seals with said walls, and a shim including a non-porous stiff sheet overlying a surface of the second material opposite surfaces of the second material engaging said walls of said slots and overlying opposite edges of said material in the second slots adjacent bases of the second slots to preclude or minimize flow of a fluid from the high pressure region on the shim side of the second seal assembly past the second seal assembly between the second material and said second slot walls and into the lower pressure region.

The invention will now be described in greater detail, by way of example, with reference to the drawings, in which:-
FIGURE 1 is a fragmentary perspective view, with parts in cross-section, of a pair of adjacent transition pieces and a first-stage nozzle;
FIGURE 2 is a fragmentary side elevational view of a seal assembly between a transition piece and a first-stage nozzle according to a preferred embodiment of the invention;
FIGURE 3 is an enlarged fragmentary view of the edge of the seal assembly shown in Figure 2;
FIGURE 4 is a fragmentary perspective view with parts displaced from final positions relative to one another illustrating the seal assemblies between the transition pieces and the first-stage nozzle as well as between adjacent transition pieces;
FIGURE 5 is a perspective view of a spline seal constructed in accordance with the invention;
FIGURE 6 is an enlarged cross-sectional view of the spline seal of Figure 4 located in the grooves of adjacent transition pieces; and
FIGURE 7 is a view similar to Figure 4 illustrating final assembly of the seal.

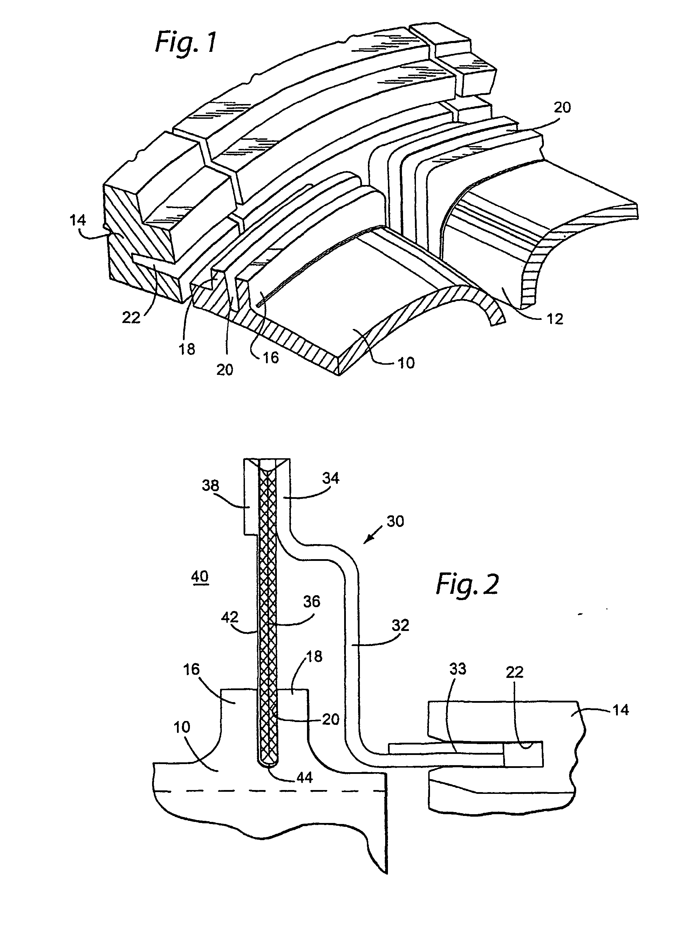

Figure 1, illustrates a pair of adjacent transition pieces 10 and 12 and an annular interface forming part of a first-stage nozzle 14. It will be appreciated that there are a plurality of transition pieces arranged in an annular array thereof in communication with combustors for the gas turbine whereby the hot gases of combustion flow from the combustors through the transition pieces into the first-stage nozzle. The exit ends of the transition pieces are generally rectilinear passages for flowing the hot gases of combustion into the first-stage nozzle.

The transition pieces typically have a surrounding pair of flanges 16 and 18 defining a slot 20 therebetween. As illustrated in Figure 1, slot 20 of each transition piece, for example, transition pieces 10 and 12, extends outwardly about side walls of the transition pieces generally perpendicularly to the flow of the hot combustion gases. The opposing slots of the adjacent transition pieces register laterally one with the other. Additionally, the annular interface of first-stage nozzle 14 has a generally annular slot 22 opening toward the combustor, i.e., in a generally axial direction relative to flow of the hot gases. Seal assemblies are typically provided between the transition pieces and the first-stage nozzle, with opposite edges of the seal assemblies residing in respective slots 20 and 22.

Figure 2 illustrates a seal assembly 30, constructed in accordance with a preferred embodiment of the invention, extending between respective slots 20 and 22 of transition piece 10 and first-stage nozzle 14. Seal assembly 30 includes a generally arcuate extending bracket 32 bent at one end forming a edge 33 for reception in slot 22 of first-stage nozzle 14. The opposite edge 34 of bracket 32 extends generally perpendicularly to the flow of gases through the transition piece and overlies, and is secured to, the outer edge of a metallic cloth 36. Cloth 36 is preferably a woven or knitted metallic cloth. A retaining strip 38 is provided along the opposite side of metallic cloth 36 from bracket edge 34 and the outer edge of cloth 36 is sandwiched between and secured for example, by welding, to bracket edge 34 and retaining strip 38. Metallic cloth 36 depends from bracket 32 into slot 20 of transition piece 10. Metallic cloth 36 may comprise a single layer and preferably comprises a pair of layers folded one over the other, the fold line appearing along the lower edge of the cloth in slot 20. The cloth may comprise a high temperature-resistant material, such as metal, ceramic or polymer fibers which have been woven, knitted or pressed into a layer of fabric. If there are two layers of cloth, the multiple cloth layers may comprise different materials, a different layer construction or have different thicknesses, depending upon particular seal applications. Preferably, a Dutch twill weave cloth assemblage formed of a high temperature cobalt-based superalloy, such as L-605 or Hanes-25 may be utilized.

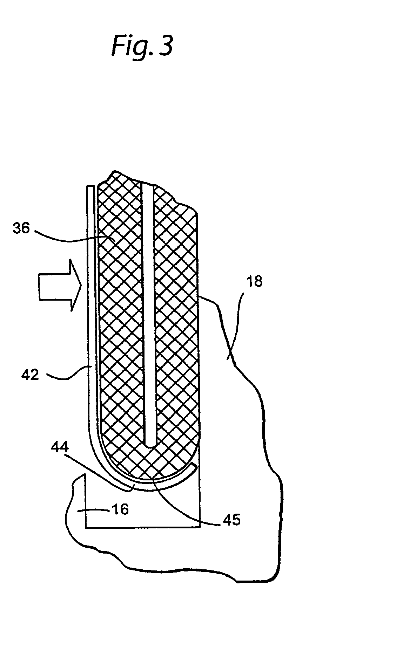

On the high pressure region or high pressure side 40 of the cloth seal, a stiff high temperature-resistant shim 42 is provided in the form of sheet material. The shim extends along the surface of metallic cloth 36 on the high pressure side and into slot 20 of the transition piece. As illustrated in Figures 2 and 3, lower edge 44 of shim 42 is extended or bent over lower edge 45 of metallic cloth 36 and extended to the sealing surface of slot 20, i.e., the face of flange 18, engaged by cloth 36 to provide enhanced flow resistance in addition to the resistance to flow afforded by the cloth. By forming the shim to overlie the lower edge of metallic cloth 36 in the slot, any flow from high pressure region 40 around the lower edge of cloth 36 to a lower pressure region on the opposite side of the seal assembly is choked, i.e., precluded or minimized. Moreover, by applying a shim in this form, added flow resistance on top of the resistance offered by the filtering cloth material is provided.

Shim 42 preferably comprises at least one layer but may comprise two superimposed identical layers of shim having staggered seams for added flexibility. Each shim layer may comprise a metal, ceramic or polymer sheet.

For example, a shim layer may comprise a high temperature cobalt-based superalloy such as Inconel-750 or HS-188. The shim layers can comprise different materials and/or have different thicknesses, depending upon the particular seal application.

It will be appreciated that a plurality of seal assemblies 30 are provided about the annular array of transition pieces to accommodate relative movement of the transition pieces and the first-stage nozzle. The adjacent seal assemblies may abut one another in side-by-side relation. Spline seals are employed to seal between the opposed lateral edges of the transition pieces as well as to overlie the abutting surfaces of seal assemblies 30.

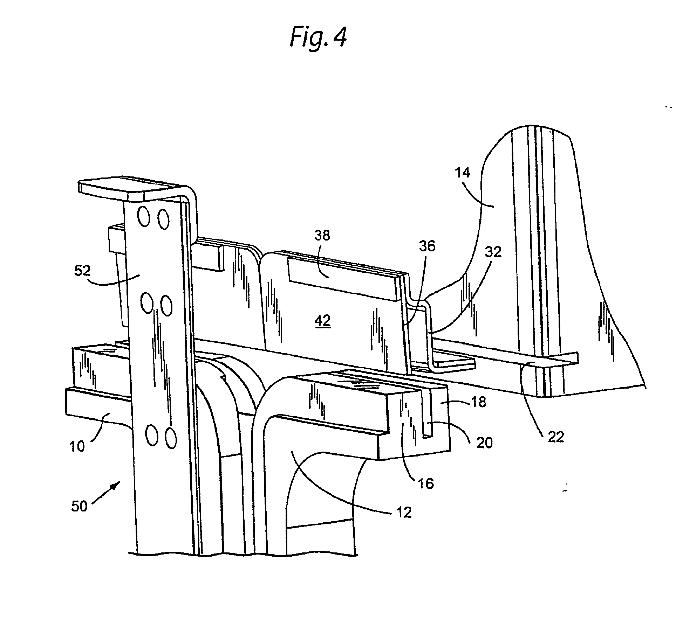

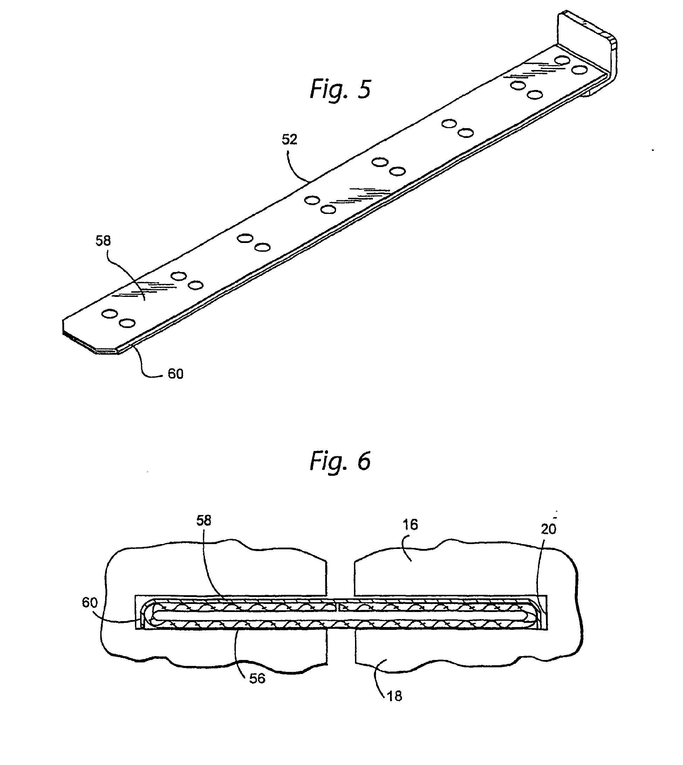

A spline seal 50, shown in Figure 4, generally comprises an elongated member 52, as illustrated in Figure 5, formed of a folded-over metallic cloth 56 and an elongate shim 58, as shown in Figure 6. The metallic cloth and the shim of the elongated spline seals are formed of the same materials as the corresponding parts of seal assemblies 30 sealing between the transition pieces and the first-stage nozzle. As illustrated in Figures 5 and 6, the lateral edges 60 of each shim 58 overlie the lateral edges of metallic cloth 56 and extend to the sealing surfaces of the slots engaged by the exposed face of cloth 56. With the spline seals residing in the opposed registering slots 20 of adjacent transition pieces 10 and 12, and with the exposed surfaces of cloth 56 engaging the sealing surfaces of the slots on sides opposite the shims, it will be appreciated that the overlying lateral edges 60 of each shim 58 choke any leakage flow from the high-pressure region past the long edges of each shim into the filtering cloth material and beyond.

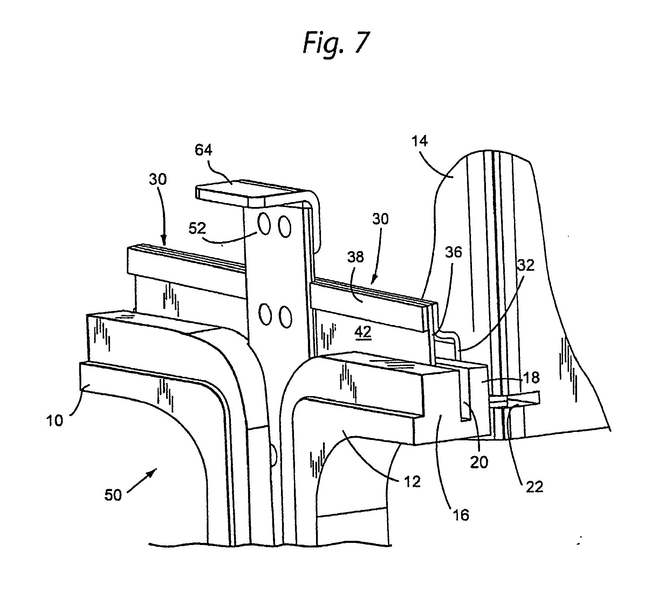

As illustrated in final assembly in Figure 7, each spline seal 50 extends along the joint between adjacent seal assemblies 30. The strip 38 of each adjacent seal assembly 30 extends short of the lateral edge of the seal assembly 30 to accommodate the spline seal assembly 30 in final assembly. The bent tabs 64 of spline seals 50 are secured to the first-stage nozzle interface.

## Claims

1. A seal assembly for sealing between the first and second turbine parts of a gas turbine having a first turbine part (10) and a second turbine part (12), said first turbine part including a slot (20), said seal assembly including:
a high temperature-resistant flexible material (36,56) received in the slot of the first turbine part and having a surface engaging a wall of the first turbine part forming part of the slot to form a seal therewith;
said seal assembly being **characterised by**
a shim (42,58) including a non-porous stiff sheet overlying a surface of the material opposite the surface thereof engaging the wall and overlying an edge (45) of the material in the slot adjacent a base of the slot to preclude or minimize flow of fluid from a high pressure region on the shim side of the seal assembly past the seal and into a lower pressure region.

2. A seal assembly according to Claim 1 wherein the material comprises a metallic cloth.

3. A seal assembly according to Claim 1 wherein said first turbine part includes a transition piece having said slot, said second turbine part including a first-stage nozzle (22) having a slot, and said seal assembly including a bracket (32) secured at one edge (34) to said material and having an opposite edge (33) received in said first-stage nozzle slot (22).

4. A seal assembly according to claim 1 or 2, wherein the first turbine part includes a transition piece (10) and said second turbine part includes a first-stage nozzle (14) for receiving hot gases of combustion from a combustor, said transition piece including the slot (20), the seal assembly (30) extending between the transition piece (10) and the first-stage nozzle (14), the non-porous stiff sheet overlying a surface of the material opposite the surface of said material engaging the wall.

5. A seal assembly according to Claim 4 wherein said first-stage nozzle includes a slot (22), said seal assembly including a bracket (32) secured along one edge (34) to said material and having an opposite edge (33) received in said first-stage nozzle slot.

6. A seal assembly according to claim 1 or 2 wherein the seal assembly is a spline seal assembly and said first and second turbine parts include a pair of adjacent transition pieces (10, 12) for receiving hot gases of combustion from combustors and flowing the hot gases into a first-stage turbine nozzle (14), said adjacent transition pieces having opposing side walls including registering slots (20), wherein the high temperature-resistant flexible material (56) is received in the slots of the adjacent transition pieces and engaging walls forming said slots to form respective seals with said walls, and the non-porous stiff sheet of the shim overlying a side of the material opposite sides thereof engaging said walls and overlying opposite edges of said material in the slots adjacent bases of the slots to preclude or minimize flow of a fluid from a high pressure region on the shim side of the seal assembly past the seal between the material and said slot walls and into a lower pressure region.

7. A gas turbine having seal assemblies according to claim 1 or 2 wherein said first and second turbine parts include at least a pair of adjacent transition pieces (10, 12) and a first-stage nozzle (14) for receiving hot gases of combustion from combustors, said transition pieces including outwardly opening first slots (20) and said nozzle including opposed registering second slots (22), first seal assemblies (30) extending between the transition pieces and the first-stage nozzle with first said high temperature-resistant flexible materials received in the first slots of the transition pieces and having surfaces engaging walls of the first slots to form seals therewith and shims whose non-porous stiff sheets overly surfaces of the first materials opposite the surfaces of said first materials engaging the first slot walls and overlying edges of the first materials in the slots adjacent bases thereof to preclude or minimize flow of fluid from a high pressure region on the shim side of the seal assemblies past the seal assemblies and into a lower pressure region, a second seal assembly (50) for sealing between said adjacent transition pieces, said second seal assembly including a second high temperature-resistant flexible material received in the second slots of the adjacent transition pieces and engaging walls forming said second slots to form respective seals with said walls, and a shim including a non-porous stiff sheet overlying a surface of the second material opposite surfaces of the second material engaging said walls of said second slots and overlying opposite edges of said material in the second slots adjacent bases of the second slots to preclude or minimize flow of a fluid from the high pressure region on the shim side of the second seal assembly past the second seal assembly between the second material and said second slot walls and into the lower pressure region.

## Patentansprüche

1. Dichtungsanordnung zum Abdichten zwischen den ersten und zweiten Turbinenteilen einer einen ersten Turbinenteil (10) und einen zweiten Turbinenteil (12) besitzenden Gasturbine, wobei der erste Turbinenteil einen Schlitz (20) enthält, während die Dichtungsanordnung enthält:
ein hochtemperaturbeständiges flexibles Material (36, 56), das in dem Schlitz des ersten Turbinenteils aufgenommen ist und eine Oberfläche besitzt, die mit einer einen Teil des Schlitzes bildenden Wand des ersten Turbinenteils in Eingriff steht, um eine Dichtung damit auszubilden,
wobei die Dichtungsanordnung **gekennzeichnet ist durch**:
eine Blechbeilage (42, 58), die ein nicht poröses steifes Blech enthält, das über einer Oberfläche des Materials gegenüber dessen mit der Wand in Eingriff stehenden Oberfläche liegt und über einen Rand (45) des Materials in dem Schlitz angrenzend an eine Basis des Schlitzes liegt, um einen Fluidstrom aus einem Hochdruckbereich auf der Blechbeilagenseite der Dichtungsanordnung an der Dichtung vorbei und in einen Niederdruckbereich auszuschließen oder zu minimieren.

2. Dichtungsanordnung nach Anspruch 1, wobei das Material ein metalldurchwirktes Gewebe aufweist.

3. Dichtungsanordnung nach Anspruch 1, wobei das erste Turbinenteil ein Übergangsstück mit dem Schlitz enthält, das zweite Turbinenteil einen Leitapparat einer ersten Stufe mit einem Schlitz (22) enthält und wobei die Dichtungsanordnung einen Träger (32) enthält, der an einem Rand (34) am dem Material befestigt ist und einen in dem Schlitz (22) der Leiteinrichtung der ersten Stufe aufgenommenen gegenüberliegenden Rand (33) besitzt.

4. Dichtungsanordnung nach Anspruch 1 oder 2, wobei das erste Turbinenteil ein Übergangsstück (10) enthält und das zweite Turbinenteil einen Leitapparat (14) einer ersten Stufe zur Aufnahme heißer Verbrennungsgase aus einem Brenner enthält, wobei das Übergangsstück den Schlitz (20) enthält, die Dichtungsanordnung (30) sich zwischen dem Übergangsstück (10) und dem Leitapparat (14) der ersten Stufe erstreckt und das nicht poröse steife Blech über einer Oberfläche des Materials gegenüber dessen mit der Wand in Eingriff stehenden Oberfläche des Materials liegt.

5. Dichtungsanordnung nach Anspruch 4, wobei der Leitapparat der ersten Stufe einen Schlitz (22) enthält, die Dichtungsanordnung einen Träger (32) enthält, der entlang einem Rand (34) am dem Material befestigt ist und einen in dem Schlitz der Leiteinrichtung der ersten Stufe aufgenommenen gegenüberliegenden Rand (33) besitzt.

6. Dichtungsanordnung nach Anspruch 1 oder 2, wobei die Dichtungsanordnung eine Keilprofildichtungsanordnung ist und die ersten und zweiten Turbinenteile ein Paar benachbarter Übergangsstücke (10, 12) enthalten, um heiße Verbrennungsgase aus Brennern aufzunehmen und die heißen Gase in eine Leitvorrichtung (14) einer ersten Turbinenstufe strömen zu lassen, wobei die benachbarten Übergangsteile gegenüberliegende Seitenwände mit ausgerichteten Schlitzen (20) besitzen, wobei das hochtemperaturbeständige, flexible Material (56) in den Schlitzen der benachbarten Übergangsteile aufgenommen ist und mit die Schlitze ausbildenden Wänden in Eingriff steht, um entsprechende Dichtungen mit den Wänden auszubilden, und das nicht poröse steife Blech der Blechbeilage über einer Seite des Materials gegenüber dessen mit den Wänden in Eingriff stehenden Seiten liegt und über gegenüberliegenden Rändern des Materials in den Schlitzen angrenzend an die Basen der Schlitze liegt, um einen Fluidstrom aus einem Hochdruckbereich auf der Blechbeilagenseite der Dichtungsanordnung an der Dichtung vorbei zwischen dem Material und den Schlitzwänden und in einen Niederdruckbereich auszuschließen oder zu minimieren.

7. Gasturbine mit Dichtungsanordnungen nach Anspruch 1 oder 2, wobei die ersten und zweiten Turbinenteile wenigstens ein Paar benachbarter Übergangsstücke (10, 12) und einen Leitapparat (14) einer ersten Stufe zur Aufnahme heißer Verbrennungsgase aus Brennern enthalten, wobei die Übergangsstücke sich nach außen öffnende erste Schlitze (20) enthalten und der Leitapparat gegenüberliegende ausgerichtete zweite Schlitze (22) enthält, sich erste Dichtungsanordnungen (30) zwischen den Übergangsstücken und dem Leitapparat der ersten Stufe erstrecken, wobei die ersten hochtemperaturbeständigen flexiblen Materialien in den ersten Schlitzen der Übergangsstücke aufgenommen sind und Oberflächen, die mit Wänden der ersten Schlitze in Eingriff stehen, um Dichtungen damit auszubilden, und Blechbeilagen besitzen, deren nicht porösen steifen Bleche über Oberflächen der ersten Materialien gegenüber den mit den ersten Schlitzwänden in Eingriff stehenden Oberflächen der ersten Materialien liegen, und über Rändern der ersten Materialien in den Schlitzen angrenzend an deren Basen liegen, um einen Fluidstrom aus einem Hochdruckbereich auf der Blechbeilagenseite der Dichtungsanordnung an den Dichtungsanordnungen vorbei in einen Niederdruckbereich auszuschließen oder zu minimieren, eine zweite Dichtungsanordnung (50) zum Abdichten zwischen benachbarten Übergangsteilen, wobei die zweite Dichtungsanordnung ein zweites hochtemperaturbeständiges flexibles Material enthält, das in den zweiten Schlitzen der benachbarten Übergangsstücke aufgenommen ist und mit die zweiten Schlitze bildenden Wänden in Eingriff steht, um entsprechende Dichtungen mit den Wänden auszubilden, und eine Blechbeilage, die ein nicht poröses steifes Blech enthält, das über einer Oberfläche des zweiten Materials gegenüber mit den Wänden der zweiten Schlitze in Eingriff stehenden Oberflächen der zweiten Materialien liegt, und über gegenüberliegenden Rändern des Materials in den Schlitzen angrenzend an die Basen der zweiten Schlitze liegt, um einen Fluidstrom aus dem Hochdruckbereich auf der Blechbeilagenseite der zweiten Dichtungsanordnung an der zweiten Dichtungsanordnung vorbei zwischen dem zweiten Material und den zweiten Schlitzwänden und in den Niederdruckbereich auszuschließen oder zu minimieren.

## Revendications

1. Ensemble de joint d'étanchéité pour l'étanchéité entre les première et seconde parties de turbine d'une turbine à gaz ayant une première partie (10) de turbine et une seconde partie (12) de turbine, ladite première partie de turbine comprenant une rainure (20), ledit ensemble de joint d'étanchéité comprenant :
un matériau souple (36, 56) réfractaire à haute température reçu dans la rainure de la première partie de turbine et ayant une surface au contact d'une paroi de la première partie de turbine faisant partie de la rainure afin de former un joint d'étanchéité avec celle-ci ;
ledit ensemble de joint d'étanchéité étant **caractérisé par**
une cale d'épaisseur (42, 58) comportant une feuille rigide non poreuse recouvrant une surface du matériau opposée à la surface de celui-ci au contact de la paroi et recouvrant un bord (45) du matériau dans la rainure au voisinage immédiat d'une base de la rainure afin d'empêcher ou de limiter fortement l'écoulement de fluide depuis une région à haute pression sur le côté cale d'épaisseur de l'ensemble de joint d'étanchéité, au-delà du joint et jusque dans une région à pression plus basse.

2. Ensemble de joint d'étanchéité selon la revendication 1, dans lequel le matériau comporte un tissu métallique.

3. Ensemble de joint d'étanchéité selon la revendication 1, dans lequel ladite première partie de turbine comprend une pièce de transition pourvue de ladite rainure, ladite seconde partie de turbine comprenant un distributeur de premier étage pourvu d'une rainure (22), et ledit ensemble de joint d'étanchéité comprenant un support (32) fixé sur un premier bord (34) audit matériau et ayant un bord opposé (33) reçu dans ladite rainure (22) de distributeur de premier étage.

4. Ensemble de joint d'étanchéité selon la revendication 1 ou 2, dans lequel la première partie de turbine comprend une pièce de transition (10) et ladite seconde partie de turbine comprend un distributeur (14) de premier étage pour recevoir d'une chambre de combustion des gaz de combustion chauds, ladite pièce de transition comportant la rainure (20), l'ensemble de joint d'étanchéité (30) s'étendant entre la pièce de transition (10) et le distributeur (14) de premier étage, la feuille rigide non poreuse recouvrant une surface du matériau opposée à la surface dudit matériau au contact de la paroi.

5. Ensemble de joint d'étanchéité selon la revendication 4, dans lequel ledit distributeur de premier étage comprend une rainure (22), ledit ensemble de joint d'étanchéité comprenant un support (32) fixé le long d'un premier bord (34) audit matériau et ayant un bord opposé (33) reçu dans ladite rainure du distributeur de premier étage.

6. Ensemble de joint d'étanchéité selon la revendication 1 ou 2, dans lequel l'ensemble de joint d'étanchéité est un ensemble de joint à languette et lesdites première et seconde parties de turbine comprennent une paire de pièces de transition adjacentes (10, 12) pour recevoir de chambres de combustion des gaz de combustion chauds et faire entrer les gaz chauds dans un distributeur (14) de premier étage de turbine, lesdites pièces de transition adjacentes ayant des parois latérales opposées comportant des rainures de positionnement précis (20), le matériau souple (56) réfractaire à haute température étant reçu dans les rainures des pièces de transition adjacentes et venant au contact de parois formant lesdites rainures afin de former des joints d'étanchéité respectifs avec lesdites parois, et la feuille rigide non poreuse de la calme d'épaisseur recouvrant une face du matériau opposée à des faces de celui-ci au contact desdites parois et recouvrant des bords opposés dudit matériau dans les rainures au voisinage immédiat de bases des rainures afin d'empêcher ou de limiter fortement l'écoulement d'un fluide depuis une région à haute pression sur le côté cale d'épaisseur de l'ensemble de joint d'étanchéité, au-delà du joint d'étanchéité entre le matériau et lesdites parois de rainures, et jusque dans une région à pression plus basse.

7. Turbine à gaz ayant des ensembles de joints d'étanchéité selon la revendication 1 ou 2, dans laquelle lesdites première et seconde parties de turbine comprennent au moins une paire de pièces de transition adjacentes (10, 12) et un distributeur (14) de premier étage pour recevoir de chambres de combustion des gaz de combustion chauds, lesdites pièces de transition comportant des premières rainures (20) débouchant vers l'extérieur et ledit distributeur comprenant des secondes rainures de positionnement précis opposées (22), des premiers ensembles de joints d'étanchéité (30) s'étendant entre les pièces de transition et le distributeur de premier étage, lesdits matériaux souples réfractaires à haute température étant reçus dans les premières rainures des pièces de transition et ayant des surfaces au contact de parois des premières rainures afin de former des joints d'étanchéité avec celles-ci et des cales d'épaisseur dont des feuilles rigides non poreuses recouvrent des surfaces des premiers matériaux opposées à des surfaces desdits premiers matériaux au contact des parois des premières rainures et recouvrant des bords des premiers matériaux dans les rainures au voisinage immédiat de bords de celles-ci afin d'empêcher ou de limiter fortement l'écoulement de fluide depuis une région à haute pression, du côté cale d'épaisseur des ensembles de joints d'étanchéité, au-delà des ensembles de joints d'étanchéité et jusque dans une région à pression plus basse, un second ensemble de joint d'étanchéité (50) pour l'étanchéité entre lesdites pièces de transition adjacentes, ledit second ensemble de joint d'étanchéité comprenant un second matériau souple réfractaire à haute température reçu dans les secondes rainures des pièces de transition adjacentes et au contact de parois formant lesdites secondes rainures afin de former des joints d'étanchéité respectifs avec lesdites parois, et une cale d'épaisseur comportant une feuille rigide non poreuse recouvrant une surface du second matériau opposée à des surfaces du second matériau au contact desdites parois desdites secondes rainures et recouvrant des bords opposés dudit matériau dans les secondes rainures au voisinage immédiat de bases des secondes rainures afin d'empêcher ou de limiter fortement l'écoulement d'un fluide depuis la région à haute pression, côté cale d'épaisseur du second ensemble de joint d'étanchéité, au-delà du second ensemble de joint d'étanchéité entre le second matériau et lesdites parois des secondes rainures, et jusque dans la région à pression plus basse.
